# EUROPÄISCHE PATENTSCHRIFT

(11) **EP 1 657 017 B1**
(45) Veröffentlichungstag und Bekanntmachung des Hinweises auf die Patenterteilung: **11.02.2015**
(21) Anmeldenummer: 05024721.2
(22) Anmeldetag: 11.11.2005
(51) Int. Cl.: B23K 9/20

(54) **Verfahren zum Kurzzeit-Lichtbogenschweissen**
Method for short-circuit arc welding
Procédé de soudage à l'arc par court-circuit

(30) Priorität: 16.11.2004 DE 102004056021
(43) Veröffentlichungstag der Anmeldung: 17.05.2006
(73) Patentinhaber: Newfrey LLC, Newark, Delaware 19711 (US)
(72) Erfinder: Schmitt, Klaus Gisbert, Dr., 35390 Giessen (DE); Schneider, Joachim, 35630 Ehringshausen (DE)
(74) Vertreter: Steil, Christian

(56) Entgegenhaltungen:
- EP-A- 1 060 822
- DE-A- 2 739 867
- DE-A- 19 922 679
- GB-A- 2 171 946

## Beschreibung

Die Erfindung betrifft ein Verfahren zum Kurzzeit-Lichtbogenschweißen mit Hubzündung gemäß Oberbegriff des Anspruch 1, wobei ein Bolzen an ein Werkstück, insbesondere an ein Blech, geschweißt wird.

Dieses Verfahren wird auch als Bolzenschweißen bezeichnet.

Man unterscheidet beim Bolzenschweißen zwischen Verfahren mit Hubzündung und Verfahren mit Spitzenzündung.

Beim Bolzenschweißen mit Hubzündung wird ein Bolzen auf das Werkstück aufgesetzt und es wird ein Pilotstrom eingeschaltet. Anschließend wird der Bolzen von dem Werkstück abgehoben, wobei ein Lichtbogen gezogen wird.

Beim Spitzenzündungsverfahren wird der Bolzen generell in einem Abstand von dem Werkstück gehalten, mittels Federkraft auf das Werkstück zu bewegt und unmittelbar mit dem Kontakt von Bolzen und Werkstück wird der Lichtbogen durch eine Hochspannung (in der Regel eine Kondensatorentladung) entzündet.

Auf dem Gebiet der Kraftfahrzeugtechnik hat sich das Bolzenschweißen mit Hubzündung durchgesetzt. Ein Hauptgrund hierfür liegt darin, dass das Bolzenschweißen mit Spitzenzündung auf Grund der schlagartigen Lichtbogenzündung vergleichsweise laut ist. Ferner lässt das Bolzenschweißen mit Spitzenzündung keine hinreichende Schweißqualität an ungereinigten Karosseriebauteilen zu. Ungereinigt soll in diesem Zusammenhang bspw. bedeuten, dass das Karosseriebauteil nicht von Schmiermittel eines vorhergehenden Tiefziehprozesses gereinigt worden ist.

Auf dem Gebiet der Kraftfahrzeugtechnik ist es seit vielen Jahren bekannt, metallische Bolzen auf Stahlbleche aufzuschweißen. In den letzten Jahren hat der Werkstoff Aluminium an Bedeutung gewonnen und wird im Karosseriebau umfänglich eingesetzt. Daher sind auch entsprechende Verfahren zum Schweißen von Aluminiumbolzen auf Aluminiumbleche entwickelt worden.

Der Begriff Bolzen ist im vorliegenden Zusammenhang breit zu verstehen. Hierbei kann es sich um Gewindebolzen, Stifte, Kopfbolzen, T-Bolzen, Stifte mit Innengewinde etc. handeln. Vorliegend soll der Begriff Bolzen jedoch auch andere Werkstücke umfassen, die im Wege des Bolzenschweißverfahrens auf Bleche aufgeschweißt werden, wie beispielsweise Muttern, etc.

Das Bolzenschweißen mit Hubzündung ist beschrieben in dem Merkblatt DVS0902 des Deutschen Verbandes für Schweißtechnik e.V. Das Spitzenzündungsverfahren ist in dem Merkblatt DVS0903 beschrieben.

Unterschiedliche Bolzentypen sind in der Europäischen Norm prEN ISO 13918 beschrieben.

Bei dem Verfahren mit Spitzenzündung ist an der zu dem Werkstück weisenden Stirnseite des Bolzens eine sog. Zündspitze vorgesehen. Mit ihrer Hilfe wird der Lichtbogen gezündet. Dabei wird die Zündspitze von einem sehr schnell ansteigenden Kondensatorentladestrom (- 10 kA/ms) durchflossen. Dieser hohe Strom führt wie bei einer elektrischen Schmelzsicherung zu einer explosionsartigen Verdampfung der Zündspitze und damit zur Zündung des Lichtbogens. Damit das Entstehen des Lichtbogens vom Zeitpunkt her und die Lichtbogenbrennzeit immer reproduzierbar sind, werden in Bezug auf den Durchmesser und die Länge der Zündspitze sehr hohe Anforderungen an die Maßhaltigkeit gestellt (in der Regel ± 0,05 mm bzw. ± 0,08 mm).

Beim Bolzenschweißen mit Hubzündung ist die zu dem Werkstück weisende Stirnseite des Bolzens in der Regel flach oder leicht konisch ausgebildet. Die Zündung des Lichtbogens erfolgt bei kurzgeschlossenem Schweißkreis mit einer Pilotstromstärke von beispielsweise etwa 20 A durch das definierte Abziehen des Bolzens vom Werkstück. Die Entstehung des Lichtbogens ist daher leise und absolut reproduzierbar. Daher ist bei diesem Verfahren an dem Bolzen generell keine Zündspitze notwendig.

Bei Stahlbolzen mit größerem Durchmesser (> 10 mm) kann jedoch an der Bolzenspitze (bei konischer Stirnfläche) eine eingeprägte Aluminiumkugel oder Aluminium-Spritzschicht vorgesehen sein. Das Aluminium dient dabei als Flussmittel (vgl. die oben genannte Norm prEN ISO 13918).

Ferner dient dieser Aluminiumzusatz zu den Stahlbolzen dazu, den Lichtbogen leichter zu zünden und das Schweißbad zu desoxidieren (den Sauerstoff abzubinden), wie es in dem oben genannten Merkblatt DVS0902 (vom Juli 1988) erläutert ist.

Ein Bolzen für das Bolzenschweißen mit Spitzenzündung ist beschrieben in dem Dokument DE 196 22 958 Cl. Dabei ist die Stirnfläche des Bolzens kegelförmig nach innen gewölbt. Die Zündspitze ist dabei deutlich länger auszubilden. Das Ziel dieser Maßnahme ist es, die auftretende Blaswirkung zu minimieren. Das dort verwendete Kondensatorentladungsschweißen bietet auf Grund seiner hohen treibenden Spannung und der Größe des auftretenden Schweißstroms (ungefähr 10 kA) dem Lichtbogen hinreichend Gelegenheit, um dorthin auszuweichen, wo die geringste Austrittsarbeit für Elektronen zu leisten ist. Dies äußert sich in Form von intensiver Blaswirkung, wenn die Oberflächenzustände nicht gleichmäßig ausgebildet sind.

Aus der DE-OS 2 227 384 ist ferner ein Schweißbolzen für das Spitzenzündungsverfahren bekannt, der eine Zündspitze aufweist, die an symmetrisch und radial angeordneten, sternförmigen Erhöhungen vorgesehen ist, die zum Rand der Stirnseite hin flacher werden.

Dabei ist eine Abwandlung des Spitzenzündungsverfahrens offenbart, wobei die Kontaktspitze gegen das Werkstück gepresst wird, wenn der Lichtbogen gezündet wird. Hierbei dient die Kontaktspitze auch als eine Art Abstandshalter, da der Abstand zwischen den Bolzen und dem Werkstück nach dem Zünden des Lichtbogens und dem Verdampfen der Kontaktspitze nicht mehr vergrößert wird. Vielmehr erfolgt das Eintauchen des angeschmolzenen Bolzens in das angeschmolzene Werkstück ausgehend von dieser "Kontaktspitzenhöhe".

Aus dem Dokument DE-OS 2739867 ist ein weiteres Spitzenzündungsverfahren bekannt, wobei ein erstes leitfähiges Teil an einem zweiten leitfähigen Teil befestigt wird.

Auch das Dokument DE 8017920 U1 offenbart einen Bolzen mit zylinderförmiger Zündspitze zum Bolzenschweißen mit Spitzenzündung. Die grundlegende Idee ist hierbei, dass die Zündspitze an beiden Stirnflächen des Bolzens angebracht werden kann, und dass diese Stirnflächen nicht kegelförmig, sondern eben ausgebildet sind.

Das Dokument DE 93 20 710 U1 offenbart eine Vorrichtung zum Bolzenschweißen mit Hubzündung, wobei der Schweißbolzen nagelförmig ausgebildet ist. Die Nadelspitze stellt die Fügezone des Bolzens dar. Sie geht ohne Flansch direkt in einen langen, nach außen hin elektrisch isolierten Bolzenschaft über, der dann in einem überproportional großen Nagelkopf endet. Dieser ist tellerförmig ausgebildet und kann auf seiner dem Bolzenschaft zugewandten Seite elektrisch isoliert sein. Diese Bolzen dienen zum Fixieren von Dämm- bzw. Wärmeisolationsmatten an dünnen blechförmigen Bauteilen.

Das Gebrauchsmusterdokument DE 82 20 820 U1 beschreibt einen sog. Kopfbolzen, der mittels des Bolzenschweißens mit Hubzündung mit langen Schweißzeiten von > 1 Sekunde in Stahl-Beton-Verbundkonstruktionen stumpf aufgeschweißt wird. Das Schaftende des Kopfbolzens besitzt eine stumpfe, kegelförmige Spitze mit einer Zündspitze aus einem üblichen, die Entstehung des Lichtbogens erleichternden Material, das durch Einpressen in der Spitze befestigt werden kann. Insoweit bezieht sich dieses Gebrauchsmusterdokument ebenfalls auf das Merkblatt DVS0902, woher ebenfalls offenbart ist, eine Aluminiumkugel in einen Stahlbolzen einzupressen, und zwar mit dem Vorteil, dass die Aluminiumkugel auf den geschmolzenen Stahlwerkstoff desoxidierend wirkt.

Die Offenlegungsschrift DE 199 22 679 A1 beschreibt ein zweistufiges Verfahren zum Kurzzeit-Lichtbogenschweißen, bei dem ein Bolzen mit Zündspitze zur Anwendung kommt. In der ersten Stufe erfolgt der Prozess entsprechend dem Bolzenschweißen mit Spitzenzündung, allerdings nicht mit dem Ziel, den Bolzen festzuschweißen. Vielmehr sollen durch diesen Schritt die Oberflächen in der Fügezone der beteiligten Bauteile von Tiefziehmitteln gereinigt werden und die Oberflächenbeschichtungen sollen verdampfen. Dabei wird die Oberfläche der Bauteile geringfügig partiell geschmolzen. Der eigentliche Schweißvorgang erfolgt dann etwa 1 Sekunde später in der zweiten Stufe des Prozesses, die gemäß dem Kurzzeit-Lichtbogenschweißen mit Hubzündung durchgeführt wird. Auch hierbei ist die starke Lärmentwicklung in dem ersten Prozessschritt nachteilig.

Aus dem Dokument DE 195 24 490 A1 ist ein weiteres mehrstufiges Verfahren zum Verschweißen von Schweißbolzen auf einem Werkstück bekannt. Hierbei werden jedoch gewöhnliche Bolzen verwendet.

Aus der Schrift DE 199 25 628 A1 ist ein weiteres Hubzündungsschweißverfahren mit Reinigungsstufe bekannt, wobei eine magnetische Lichtbogenablenkung verwendet wird, um den Lichtbogen und seine Form so zu beeinflussen, dass eine Beschichtung auf einer Aluminiumoberfläche dort entfernt wird, wo auch später eine Verschweißung mit dem Bolzen stattfindet.

Das Dokument DE 199 27 371 C2 offenbart ein weiteres Verfahren zum Anschweißen von Schweißelementen an ein Werkstück, wobei ein Verfahren mit Hubzündung und ein Verfahren mit Spitzenzündung offenbart sind. Ferner ist eine Vielzahl von Bolzen mit unterschiedlich ausgestalteten Stirnflächen offenbart, ohne dass jedoch im Detail angegeben wird, welche Art von Bolzen für welches Verfahren besonders günstig ist.

Das Dokument GB 2 171 946 A offenbart ein Schweißverfahren mit einem Bolzen, der eine Stirnfläche aufweist, wobei in der Mitte der Stirnfläche ein prägnanter Vorsprung ausgebildet ist. Bei dem mittels dieses Bolzens durchgeführten Verfahren wird der Bolzen mit der Spitze zunächst auf ein Werkstück aufgesetzt. Anschließend wird der Bolzen von dem Werkstück wieder abgehoben, wobei hierbei ein Pilotstrom zwischen der Spitze des Bolzens und dem Werkstück eingerichtet ist. Hiernach wird ein Hauptschweißstrom eingeschaltet.

Vor diesem Hintergrund ist es die Aufgabe der Erfindung, ein Verfahren zum Kurzzeit-Lichtbogenschweißen mit Hubzündung anzugeben, das in der Lage ist, sowohl Stahlbolzen auf Stahlblech als auch insbesondere Aluminiumbolzen auf Aluminiumblech zu schweißen, wobei ferner die Möglichkeit geschaffen werden soll, ein effizientes Reinigungsverfahren der Fügeflächen durchzuführen.

Diese Aufgabe wird durch ein Verfahren zum Kurzzeit-Lichtbogenschweißen mit Hubzündung gemäß Anspruch 1 gelöst, wobei ein Bolzen an ein Werkstück, insbesondere an ein Blech, geschweißt wird, mit den Schritten:
a) Bereitstellen eines Bolzens, der eine Stirnfläche aufweist, mit der er auf eine Schweißfläche des Werkstücks aufgeschweißt wird, wobei in der Mitte der Stirnfläche ein prägnanter Vorsprung ausgebildet ist,
b) Aufsetzen des Vorsprungs auf die Schweißfläche und Einschalten eines elektrischen Pilotstroms,
c) Abheben des Bolzens von der Schweißfläche, wobei ein Lichtbogen gezogen wird,
d) Einstellen eines durch den Lichtbogen fließenden Schweißstromes, derart, dass die Stirnfläche und die Schweißfläche anschmelzen,
e) Absenken des Schweißbolzens auf die Schweißfläche, wobei sich die Schmelzen an Stirnfläche und Schweißfläche vermischen, und
f) Abschalten des Schweißstromes, so dass die Gesamtschmelze erstarrt, um so den Bolzen stoffschlüssig mit dem Werkstück zu verbinden.

Bei dem erfindungsgemäßen Verfahren wird vereinfacht gesagt das Bolzenschweißen mit Hubzündung kombiniert mit einem Bolzen, der einen prägnanten Vorsprung nach der Art einer Kontaktspitze miteinander kombiniert. Durch dieses Verfahren wird ein entscheidender Vorteil bei der Bildung des Lichtbogens erzielt, insbesondere, wenn hierbei die Stirnseite und/oder die Schweißfläche zu reinigen sind.

Das erfindungsgemäße Verfahren eignet sich dabei insbesondere für die Anwendung in der Kraftfahrzeugindustrie.

Bei dem erfindungsgemäßen Herstellungsverfahren ist von besonderem Vorteil, dass die Toleranzen sehr gering ausfallen können. Der prägnante Vorsprung des Bolzens wird einstückig angeformt und die Toleranzen hierfür sind vergleichsweise groß, insbesondere im Vergleich zu den Toleranzen, die bei Spitzenzündungs-Bolzen notwendig sind, um eine präzise und reproduzierbare Lichtbogenzündung zu erzielen.

Zudem ist die erfindungsgemäße Verwendung von besonderer Bedeutung, da bislang von keiner Seite die Vorteile der Verwendung einer Kontaktspitze bzw. eines Vorsprunges an einem Hubzündungs-Bolzen erkannt worden sind, obgleich bei Spitzenzündungs-Bolzen ein ähnlicher Vorsprung vorhanden ist.

Der eigentliche Schweißschritt d) kann dabei, je nach Applikation, mit Gleichstrom oder einem Wechselstrom erfolgen.

Erfindungsgemäß wird nach dem Abheben des Schweißbolzens und vor dem Einstellen des Schweißstroms zunächst in einem Reinigungsschritt ein Reinigungsstrom eingestellt, der dazu ausgelegt ist, die Schweißfläche und/oder die Stirnfläche von Verunreinigungen und/oder Beschichtungen, wie Schmiermittel oder Wachs bzw. Zink o.ä. , zu reinigen.

Beim Durchführen eines Reinigungsschrittes im Rahmen eines Bolzenschweißvorganges mit Hubzündung gemäß der vorliegenden Erfindung ist von besonderem Vorteil, dass durch den prägnanten Vorsprung erreicht werden kann, dass der im Reinigungsschritt zur Anwendung kommende Lichtbogen wesentlich konzentrischer zu der Fügeachse ausgebildet wird, im Vergleich zu Fällen, bei denen der Bolzen eine ebene oder typischerweise leicht konisch zulaufende Stirnfläche aufweist.

Auch ist die Anwendung einer Spule zur magnetischen Lichtbogenbeeinflussung nicht notwendig. Hierdurch kann der Schweißkopf deutlich schlanker ausgebildet werden. Das Auftreten von zusätzlichen Störkanten wird vermieden und die Zugänglichkeit der Schweißzeuge wird nicht beeinträchtigt.

Insgesamt wird ein signifikanter Beitrag zur Verhinderung von Lichtbogenblasen nicht magnetischen Ursprungs geleistet.

Das Bereitstellen des prägnanten Vorsprungs ermöglicht es, bei der Herstellung von Schweißbolzen mittels Kaltumformung das Schmiermittel aus dem unmittelbaren Bereich der Stirnfläche in den Bereich des prägnanten Vorsprungs zu verlagern. Hier hat das Schmiermittel anders als bei Bolzen mit Zündspitze keine negative Auswirkung auf die Geometrie der Kontaktspitze. Dies führt deswegen nicht zu einer Verteuerung der Bolzenfertigung und sorgt auch für eine saubere adäquate Ausbildung der Stirnfläche des Schweißbolzens.

Denn bei herkömmlichen Bolzen sammeln sich minimale Ölmengen, die zum Schmieren des Kaltumformprozesses bei der Bolzenherstellung notwendig sind, im Stirnflächenbereich des Kaltumformwerkzeuges an und verursachen so eine eher ballen- als kegelförmige Ausformung der Stirnfläche des Bolzens. Dies kann eine Ursache für das Zünden und Aufrechterhalten des Lichtbogens außermittig von der Bolzenachse sein, und damit der Grund für eine Blaswirkung auf den Lichtbogen darstellen, die keinen magnetischen Ursprung hat.

Bei dem Reinigungsschritt des erfindungsgemäßen Verfahrens wird der Vorsprung an der Stirnfläche auch dann, wenn der Reinigungsstrom deutlich geringer ist als der Schweißstrom, in der Regel vollständig aufgeschmolzen. Hierdurch wird erreicht, dass sich nach dem eigentlichen Schweißschritt kein Abdruck auf der Werkstückrückseite durch den Vorsprung ergibt.

Generell kann der Reinigungsstrom kleiner, gleich oder größer sein als der Schweißstrom.

Durch den prägnanten Vorsprung bildet sich der Lichtbogen während des Reinigungsschrittes immer mittig an der Stirnfläche des Bolzens, so dass sichergestellt werden kann, dass die Stirnfläche und die dieser zugeordnete Schweißfläche an dem Werkstück gereinigt werden, und nicht hiervon benachbarte Bereiche. Somit kann insgesamt vermieden werden, dass der Reinigungslichtbogen unsymmetrisch ausfällt und hierdurch negative Schweißergebnisse erzielt werden, insbesondere solche Schweißergebnisse, bei denen die Biegefestigkeit in einer Richtung durch Blaswirkung stark verringert ist.

Das erfindungsgemäße Verfahren mit Reinigungsschritt eignet sich insbesondere für die Anwendung in der Kraftfahrzeugindustrie, da hier Bolzen in der Regel auf nicht gereinigte Werkstückoberflächen aufgeschweißt werden müssen. Der Reinigungsschritt ist ferner insbesondere bei dem Bolzenschweißen mit Aluminiumbauteilen von Bedeutung. Aluminiumbauteile der Automobilindustrie werden heute vor der Bearbeitung im Rohbau von den Rückständen des vorhergehenden Tiefziehprozesses gereinigt. Dies geschieht in einem Waschvorgang, der in der Regel ein kombinierter Beiz- und Passivierungsprozess ist. Der Waschvorgang hat zum Ziel, für einige folgende Prozesse geeignete und konstante Randbedingungen bereitzustellen. Zu diesen Prozessen zählt auch das Kurzzeit-Bolzenschweißen mit gezogenem Lichtbogen. Der Waschvorgang ist sehr kostenintensiv. Daher ist man bestrebt, diesen Waschvorgang in die Aluminiumblechherstellung vorzuverlagern, wo die Bleche "am Band" automatisiert oberflächenbehandelt und mit Trockenschmiermitteln oder Wachs sehr dünn und gleichmäßig (< 1 *µ*m Schichtdicke) benetzt werden. Diese Trockenschmiermittel wirken sich auf die meisten Prozesse, die nach der Kaltumformung im Karosseriebau zur Anwendung kommen, nicht negativ aus. Beim Kurzzeit-Lichtbogenschweißen gemäß dem Stand der Technik ist durch diese Vorbehandlung letztlich eine Minderung der Fügequalität in Form von Mehrporosität feststellbar.

Um die Oberflächen von Werkstücken und Bolzen von unerwünschten Benetzungen und Beschichtungen zu reinigen, wird der Reinigungsschritt durchgeführt. In Verbindung mit dem Bereitstellen des Bolzens mit prägnantem Vorsprung wird immer eine konzentrische Reinigung um die Fügezone herum erzielt, was im Stand der Technik nicht immer realisierbar war.

Dabei ist zu beachten, dass all dies ohne hochfrequente Spannungen (Spannungsspitzen bei Kondensatorentladung) bzw. Hochspannungen erfolgen kann. Generell liegen bei dem erfindungsgemäßen Bolzenschweißen mit Hubzündung die Schweißströme im Bereich < 2000 Ampere.

Ferner wird die eher ballenförmige Ausprägung der nominal kegelförmigen Stirnfläche des Schweißbolzens vermieden, die möglicherweise mit ein Grund für die ungleichmäßige Lichtbogenbildung im Reinigungsschritt war.

Erfindungsgemäß wird der Reinigungsschritt dann durchgeführt, wenn die Lichtbogenspannung bei dem Pilotstrom einen ersten vorbestimmten Schwellenwert überschreitet.

Die Lichtbogenspannung ist vereinfacht gesagt um so größer, je größer bzw. stärker die in der Regel elektrisch isolierenden Verunreinigungen bzw. Beschichtungen sind. Dies liegt daran, dass bei einem vorgegebenen Schweißstrom sich die Spannung proportional zum elektrischen Widerstand verhält.

Wenn die Stärke der Verunreinigungen/Beschichtungen folglich einen bestimmten Schwellenwert überschreitet, wird der Reinigungsschritt durchgeführt. Falls hingegen keine Verunreinigungen vorhanden sind, was sich in einer geringen Lichtbogenspannung äußert, ist es möglich, den Reinigungsschritt zu überspringen.

Gemäß einer weiteren bevorzugten Ausführungsform wird der Reinigungsschritt beendet, wenn die Lichtbogenspannung bei dem eingestellten Reinigungsstrom einen zweiten vorbestimmten Schwellenwert unterschreitet.

Dies ist vorteilhaft, da der Reinigungsschritt dann nur so lange durchgeführt werden muss, wie es tatsächlich notwendig ist.

Alternativ ist es jedoch auch möglich, den Reinigungsschritt innerhalb einer festen Zeitdauer durchzuführen, wobei die feste Zeitdauer vorzugsweise vorab einstellbar ist.

Es ist ferner bevorzugt, wenn der Reinigungsstrom als Wechselstrom eingestellt wird.

Dabei wird ein Wechselstrom niedriger Frequenz (< 200 Hz) gewählt und somit werden keine hochfrequenten Störungen erzeugt. Das Wechseln der Polarität des Reinigungsstroms hat jedoch den Vorteil, dass die Reinigungswirkung sich auf beide zu reinigenden Flächen (Stirnfläche und Schweißfläche) gleichermaßen richtet. Es ist nämlich festgestellt worden, dass der Reinigungsschritt je nach Polarität mehr auf die Stirnfläche oder mehr auf die Schweißfläche wirkt. Durch den Wechselstrom werden beide Flächen optimal gereinigt.

Dabei ist es von besonderem Vorteil, wenn während des Reinigungsschrittes die Polarität des Reinigungsstroms im Bereich zwischen zweimal und zehnmal gewechselt wird.

Dies ist steuerungstechnisch einfach zu realisieren und führt insgesamt zu guten Reinigungsergebnissen.

Gemäß einer weiteren bevorzugten Ausführungsform wird während des Reinigungsschrittes das Tastverhältnis in Abhängigkeit davon eingestellt, in welchem Umfang die Stirnfläche bzw. die Schweißfläche zu reinigen sind.

Falls bei einer Anwendung festgestellt wird, dass beispielsweise generell die Reinigung der Schweißfläche nötiger ist als die Reinigung der Stirnfläche, kann das Tastverhältnis so eingestellt werden, dass der Reinigungsstrom länger bei der Polarität bleibt, bei der er für die zu reinigende Fläche wirksamer ist.

Gemäß einer weiteren Ausführungsform wird während des Reinigungsschrittes die Symmetrie des Wechselstromes in Bezug auf die Nulllinie in Abhängigkeit davon eingestellt, in welchem Umfang die Stirnfläche bzw. die Schweißfläche zu reinigen sind.

Hierdurch kann eine ähnliche Wirkung erzielt werden wie bei der vorherigen Ausführungsform, nämlich eine Betonung der Reinigung von einer der Flächen. Es versteht sich, dass die beiden Maßnahmen auch miteinander kombiniert werden können.

Wie bereits oben erwähnt, ist es insbesondere vorteilhaft, wenn das Werkstück und der Bolzen aus einer Aluminiumlegierung hergestellt sind.

Insbesondere beim Bolzenschweißen mit Aluminium kommen die erfindungsgemäßen Vorteile besonders zum Tragen. Es lassen sich auch besonders dünne Werkstücke verwenden, ohne dass sich die Gefahr schlechter Schweißergebnisse ergibt.

Das erfindungsgemäße Verfahren lässt sich jedoch auch vorteilhaft anwenden, wenn das Werkstück und der Bolzen aus Stahl sind.

Bei dem erfindungsgemäßen Bolzen ist es von besonderem Vorteil, wenn der Vorsprung gegenüber der Stirnfläche um 0,1 bis 1 mm, insbesondere um 0,3 bis 0,6 mm vorsteht.

Dieses Maß ist dahingehend vorteilhaft, dass bei den üblichen Reinigungsströmen gewährleistet werden kann, dass der Vorsprung während des Reinigungsschrittes und/oder des Schweißschrittes vollständig aufschmilzt.

Zu diesem Zweck ist es ferner bevorzugt, wenn der Vorsprung einen Durchmesser von 0,1 bis 2 mm, insbesondere im Bereich von 0,3 bis 1,2 mm aufweist.

Auch ist es hierbei vorteilhaft, wenn der Vorsprung sich zu seinem freien Ende hin verjüngt.

Dies ermöglicht eine noch stärkere Konzentration auf die Mitte der Bolzenachse, wenn der Lichtbogen gezündet wird.

Hierbei ist es vorteilhaft, wenn der Vorsprung im Bereich der Stirnfläche einen Durchmesser im Bereich von 0,1 bis 2 mm, insbesondere von 0,3 bis 1,5 mm, besonders bevorzugt von 0,8 bis 1,2 mm aufweist.

Auch ist es hierbei vorteilhaft, wenn der Vorsprung im Bereich seines freien Endes einen Durchmesser im Bereich von 0,1 bis 2 mm, insbesondere von 0,2 bis 1,2 mm, besonders bevorzugt von 0,3 bis 0,6 mm aufweist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Bolzenschweißsystems zur Durchführung des erfindungsgemäßen Verfahrens;
- Fig. 2: eine schematische Seitenansicht eines erfindungsgemäßen Bolzens zur Verwendung in dem erfindungsgemäßen Schweißverfahren;
- Fig. 3: ein Flussdiagramm einer Ausführungsform des erfindungsgemäßen Verfahrens;
- Fig. 4: ein Diagramm von Lichtbogenstrom, Lichtbogenspannung und Bolzenweg über der Zeit zur Darstellung einer bevorzugten Ausführungsform des erfindungsgemäßen Schweißverfahrens;
- Fig. 5: eine der Fig. 4 vergleichbare Darstellung unter Auslassung eines Reinigungsschrittes;
- Fig. 6: eine der Fig. 4 vergleichbare Darstellung des Bolzenweges und des Schweißstroms über der Zeit, wobei während des Reinigungsschrittes ein Wechselstrom angelegt wird;
- Fig. 7: die Darstellung von mit dem erfindungsgemäßen Verfahren gereinigten Stirnflächen von Aluminiumbolzen; und
- Fig. 8: eine der Fig. 7 vergleichbare Darstellung von Aluminiumbolzen, die gemäß dem Stand der Technik ausgebildet waren und gereinigt wurden.

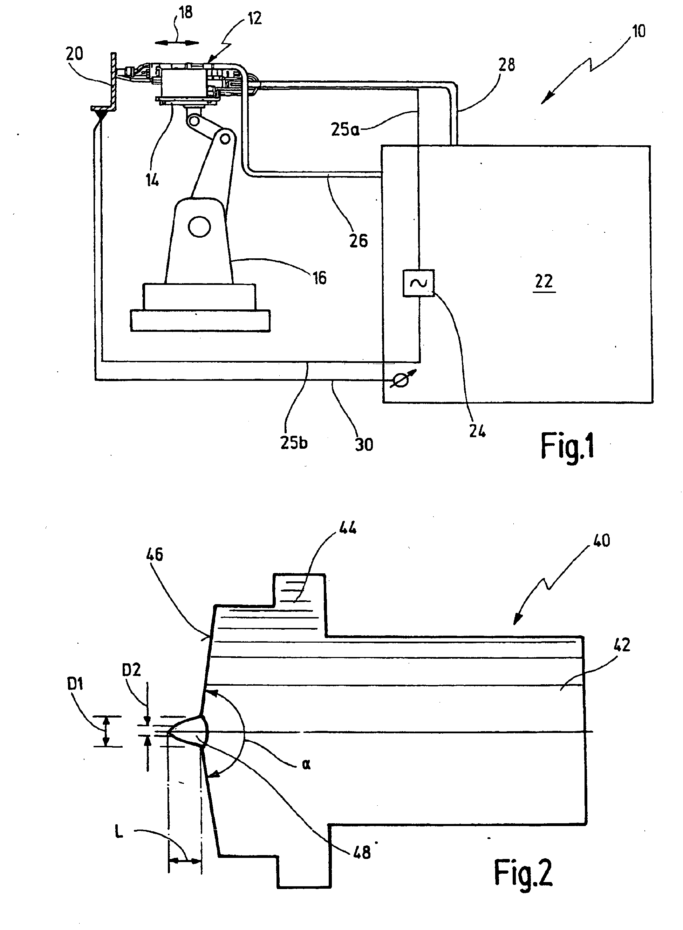

In Fig. 1 ist eine Bolzenschweißanlage zur Durchführung des erfindungsgemäßen Bolzenschweißverfahrens generell mit 10 bezeichnet.

Die Bolzenschweißanlage 10 weist einen Schweißkopf 12 an sich bekannter Bauart auf, der mittels eines Schlittens 14 an einem Roboter (Knickarmroboter) 16 gelagert ist.

Eine Hubrichtung des Schweißkopfes 12 an dem Schlitten 14 ist mit 18 bezeichnet.

Die Hubrichtung 18 verläuft senkrecht zu der Oberfläche eines Werkstückes 20 in Form eines Aluminiumbleches, auf die ein Bolzen aus Aluminium aufzuschweißen ist.

Eine Steuer-/Versorgungseinheit 22 ist mit dem Werkstück 20 und mit dem Schweißkopf 12 verbunden. Die Steuer-/Versorgungseinheit 22 weist ein Netzteil 24 (beispielsweise ein Schaltnetzteil) auf, das in der Lage ist, Schweißströme bis zu 2000 Ampere bereitzustellen, und zwar entweder in einem Gleichstrommodus oder bei einer alternativen Ausführungsform auch als Wechselstrom.

Das Netzteil 24 ist mittels einer ersten Leitung 25a mit dem Schweißkopf 12 und mit einem in Fig. 1 nicht näher bezeichneten Bolzen verbunden, der an dem Schweißkopf 12 gehalten ist.

Eine zweite Leitung 25b des Netzteils (bei Gleichstrom beispielsweise eine Masseleitung) ist mit dem Werkstück 20 verbunden.

Bolzen werden automatisiert über eine Leitung 26 dem Schweißkopf 12 zugeführt.

Ferner stellt die Steuer-/Versorgungseinheit 22 Schutzgas über eine Schutzgasleitung 28 bereit.

Zur Messung der elektrischen Parameter des Schweißvorganges, beispielsweise der Lichtbogenspannung, ist eine Messleitung 30 vorgesehen.

Die Bolzenschweißanlage 10 arbeitet generell nach dem Verfahren des Kurzzeit-Lichtbogenschweißens mit Hubzündung.

In der Bolzenschweißanlage 10 werden Bolzen 40, wie sie in Fig. 2 dargestellt sind, auf Werkstücke 20 verschweißt.

Der in Fig. 2 dargestellte Bolzen 40 ist ein Aluminiumbolzen (bzw. ein Bolzen aus einer Aluminiumlegierung) und weist einen zylindrischen Schaft 42 und weist in an sich herkömmlicher Weise einen zylindrischen Schaft 42 und einen umlaufenden Flansch 44 auf.

Der Bolzen 40 ist mit einer Stirnfläche 46 auf das Werkstück 20 aufzuschweißen. Die Stirnfläche 46 verläuft generell konisch zulaufend, mit einem Kegelwinkel α kleiner 180° und größer 165° (vgl. auch Merkblatt DVS0902).

An der Mitte der Stirnfläche 46 ist ein konisch zulaufender, prägnanter Vorsprung 48 ausgebildet.

Der Vorsprung 48 weist bei einem Durchmesser des Schaftes 42 von etwa 8 mm eine Länge L von etwa 0,6 mm auf.

Der Durchmesser D1 des Vorsprungs 48 im Bereich der Stirnfläche 46 beträgt etwa 0,6 mm. Der Durchmesser D2 des Vorsprungs 48 im Bereich seines freien Endes beträgt etwa 0,3 mm.

Der Vorsprung 48 ist bei dem erfindungsgemäßen Bolzen 40 rotationssymmetrisch ausgebildet.

Der Querschnitt des Vorsprungs 48 kann jedoch auch polygonal, also beispielsweise dreieckig, rechteckig oder auch parabelbis kegelförmig ausgebildet sein.

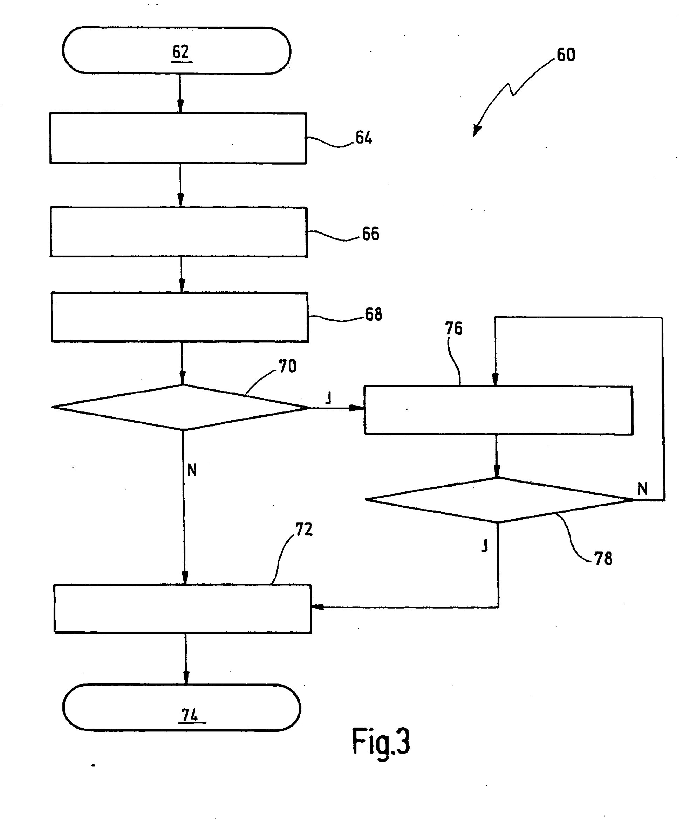

Fig. 3 stellt ein Flussdiagramm einer bevorzugten Ausführungsform des erfindungsgemäßen Bolzenschweißverfahrens dar, das in Fig. 3 generell mit 60 bezeichnet ist.

Das Bolzenschweißverfahren 60 weist nach einem Startschritt 62 einen ersten Schritt 64 auf, in welchem ein Bolzen 40 bereitgestellt wird, der eine Stirnfläche 46 aufweist, mit der er auf eine Schweißfläche des Werkstücks 20 aufgeschweißt wird, wobei in der Mitte der Stirnfläche 46 ein prägnanter Vorsprung 48 ausgebildet ist.

Der Bolzen 40 wird dabei beispielsweise in an sich bekannter Weise in einem Halter eines Schweißkopfes 12 aufgenommen. In dem Schritt 64 werden ferner der Roboter 16 und der Schlitten 14 so bewegt, dass der Schweißkopf 12 in einer Ausgangsposition positioniert wird, in der dessen Hubachse 18 etwa senkrecht auf dem Werkstück 20 steht.

Im nächsten Schritt 66 wird der Vorsprung 48 des Bolzens 40 mittels des Schlittens 14 oder mittels einer in dem Schweißkopf 12 vorgesehenen Hubeinrichtung (beispielsweise mittels Linearmotor) auf die Oberfläche, d.h. auf die Schweißfläche des Werkstücks 20 aufgesetzt. Ferner wird in dem Schritt 66 anschließend ein elektrischer Pilotstrom eingeschaltet.

Im nächsten Schritt 68 wird der Bolzen 40 von dem Werkstück 20 abgehoben (z.B. mittels Linearmotor), wobei auf Grund des fließenden elektrischen Pilotstroms ein Lichtbogen nach dem Hubzündungsverfahren gezogen wird.

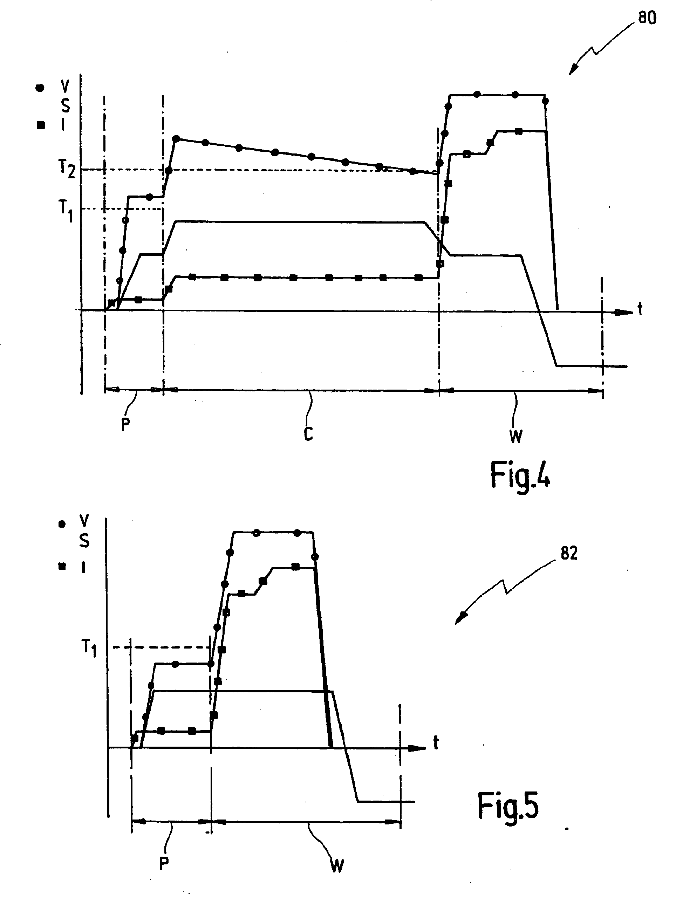

Die Schritte 64, 66 und 68 sind auch in einem Diagramm 80 in Fig. 4 dargestellt. In Fig. 4 sind der zwischen Bolzen 40 und Werkstück 20 fließende Strom I, die Lichtbogenspannung V und der Weg S des Bolzens 40 in Bezug auf das Werkstück 20 über der Zeit dargestellt.

Mit Beginn einer Pilotstromphase P wird der Strom I auf einen Pilotstromwert angehoben, wonach der Bolzen zunächst auf ein erstes Niveau abgehoben wird. In der Darstellung der Fig. 4 stellt sich hierbei eine Lichtbogenspannung V ein, die größer ist als ein erster Schwellenwert T₁.

Im Schritt 70 der Fig. 3 wird die Lichtbogenspannung V abgefragt. Wenn diese während angelegtem Pilotstrom größer ist als der Schwellenwert T₁, wird ein Reinigungsschritt 76 durchgeführt. Der Reinigungsschritt ist in Fig. 4 mit "C" (für Clean flash-Verfahren) bezeichnet.

Wenn die Lichtbogenspannung V den ersten Schwellenwert T₁ überschreitet, ist dies ein Hinweis dafür, dass die Verunreinigungen an der Stirnfläche 46 und/oder an der Schweißfläche des Werkstücks 20 so groß sind, dass es notwendig ist, den Reinigungsschritt 76 dem eigentlichen Schweißschritt vorzuschalten.

In dem Reinigungsschritt 76 wird der Strom I auf einen Reinigungsstrom erhöht. Ferner wird der Bolzen 46 weiter von der Oberfläche des Werkstücks 20 abgehoben.

Der auf Grund des Pilotstroms in der Pilotphase P gezogene Lichtbogen ist auf Grund des prägnanten Vorsprungs 48 konzentrisch zu der Achse des Bolzens 40 ausgerichtet. Der Lichtbogen bleibt auch konzentrisch während der Reinigungsphase C, wobei der Strom während dieser Reinigungsphase C so groß ist, dass der prägnante Vorsprung 48 ganz oder teilweise aufgeschmolzen wird. Die Oberflächen der Bauteile (d.h. die Stirnfläche 46 und die Schweißfläche des Werkstücks 20) werden hierbei jedoch nicht oder nur gering aufgeschmolzen. Vielmehr werden auf Grund des Reinigungsstroms in der Phase C die Verunreinigungen oder Beschichtungen an der Stirnfläche 46 und der Schweißfläche beseitigt, um ideale Voraussetzungen für den nachfolgenden Schweißprozess zu schaffen. Dabei bleibt der Lichtbogen auf Grund des prägnanten Vorsprunges immer konzentrisch zur Achse.

Während der Reinigungsphase C fällt die Lichtbogenspannung V allmählich ab. Im Schritt 78 der Fig. 3 wird abgefragt, ob die Lichtbogenspannung V unter einen zweiten Schwellenwert T₂ gefallen ist. Der zweite Schwellenwert T₂ ist in der Regel größer als der erste Schwellenwert T₁.

Wenn die Lichtbogenspannung V während der Reinigungsphase C unter den zweiten Schwellenwert T₂ gefallen ist (J in Schritt 78 der Fig. 3), wird die Reinigungsphase C beendet. Im Anschluss hieran wird der herkömmliche Schweißschritt W durchgeführt (Schritt 72 in Fig. 3). Hierbei wird zunächst der Strom I noch einmal deutlich auf einen Schweißstrom erhöht. Hierdurch schmelzen die Stirnfläche 46 und die Schweißfläche an. Alternativ kann der Reinigungsstrom jedoch auch größer sein als der eigentliche Schweißstrom, so dass der Strom auf einen Schweißstrom verringert wird. Vorab wird zu Beginn der Schweißphase W in der Regel der Abstand S zwischen dem Bolzen 40 und dem Werkstück 20 wieder verringert.

Anschließend wird der Schweißbolzen 40 innerhalb der Schweißphase W (W wie welding) auf die Schweißfläche abgesenkt, und zwar derart, dass der Flanschabschnitt 44 des Bolzens 40 im Wesentlichen auf der Oberfläche des Werkstücks 20 aufliegt. Daher erfährt der Weg S des Bolzens in der Darstellung der Fig. 4 auch einen Nulldurchgang (der Bolzen taucht sozusagen in das Werkstück ein). Das Verfahren ist dann beendet (Schritt 74).

In einem Diagramm 82 der Fig. 5 ist der Fall dargestellt, dass die Lichtbogenspannung V bei eingeschaltetem Pilotstrom I während der Pilotphase P kleiner ist als der erste Schwellenwert T₁. In diesem Fall (N im Schritt 70 der Fig. 3) wird keine Reinigungsphase durchgeführt und die Pilotphase P geht direkt in die Schweißphase W (Schritt 72 in Fig. 3) über.

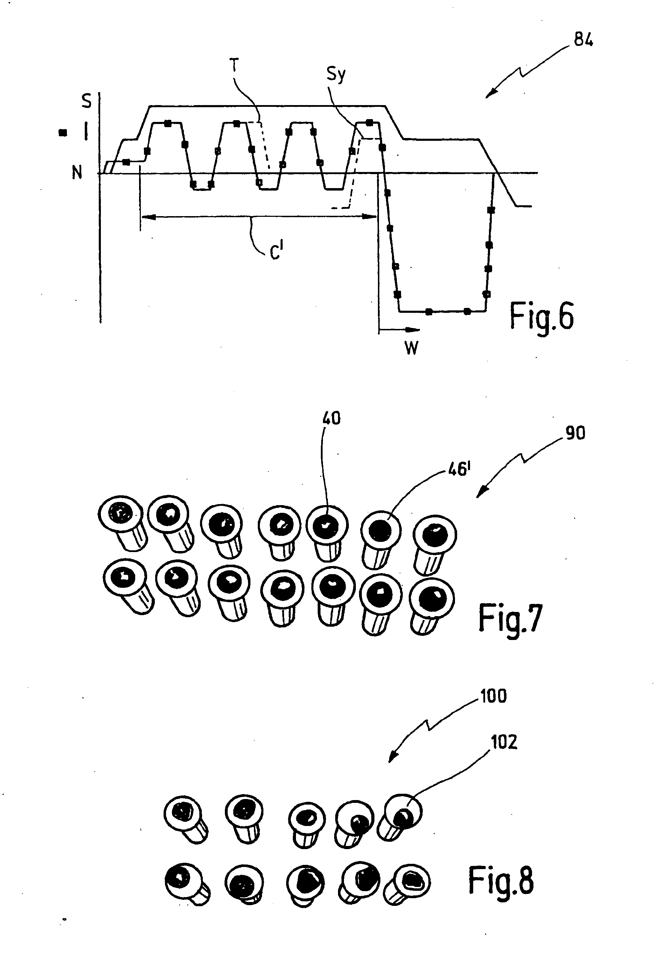

In Fig. 6 ist eine alternative Ausführungsform des erfindungsgemäßen Schweißverfahrens gezeigt, und zwar in einem Diagramm 84.

Bei der Abwandlung des erfindungsgemäßen Schweißverfahrens wird in einer Reinigungsphase C' der Reinigungsstrom I als Wechselstrom angelegt, wobei sich die Polarität des Reinigungsstroms I während dieser Phase etwa viermal ändert.

Wie es in dem Diagramm 84 gezeigt ist, ist hierbei die Symmetrie Sy gegenüber der Nulllinie N des Schweißstroms I nach oben hin verschoben, so dass ein deutlich größerer positiver Reinigungsstrom angelegt wird als ein negativer Reinigungsstrom. Diese Symmetrie Sy ist vorzugsweise einstellbar, und zwar in Abhängigkeit von den für eine bestimmte Schweißanwendung vorgegebenen Randbedingungen.

Zusätzlich hierzu (oder alternativ) kann auch das Tastverhältnis T des Wechselstroms I während der Reinigungsphase C' in Abhängigkeit von diesen Randbedingungen eingestellt werden.

Es versteht sich, dass auch während der Schweißphase anstelle eines Gleichstroms ein Wechselstrom angelegt werden kann, sofern dies zu besseren Schweißergebnissen führt.

Fig. 6 zeigt ein Foto 90 einer Mehrzahl von Schweißbolzen 40, bei denen ein Reinigungsvorgang C vor dem eigentlichen Schweißvorgang durchgeführt wurde.

Es ist zu erkennen, dass der Reinigungsschritt C zu einer konzentrischen Reinigungswirkung geführt hat. Trotz möglicherweise ungleichmäßiger Beschichtung wurde dabei auf Grund der Tatsache, dass die Bolzen 40 mit dem prägnanten Vorsprung 48 ausgestattet waren, jegliche Blaswirkung unterdrückt. Dies führte insgesamt zu einer gleichmäßigeren Ausbildung der kreisförmigen Reinigungszone konzentrisch um die Bolzenachse herum.

Demzufolge lassen sich bei entsprechend konzentrischer Reinigung der Schweißzone im Anschluss optimale Schweißergebnisse erzielen.

Fig. 8 zeigt in einer der Fig. 7 ähnlichen Darstellung 100 eine Mehrzahl von Stirnseiten 102 von Schweißbolzen, die nicht mit einem solchen prägnanten Vorsprung ausgestattet waren. Dabei hat sich auf Grund der vermutlich balligen Oberfläche der Lichtbogen nicht immer konzentrisch zu der Bolzenachse ausgebildet. Demzufolge waren die Reinigungsergebnisse nicht immer konzentrisch zu der Bolzenachse.

Bei der Reinigung der Bolzen gemäß Bild 100 wurden folgende Reinigungsparameter eingesetzt:
5 Millisekunden Anlegen von einem negativen Strom von 200 Ampère. Anschließend 30 Millisekunden Anlegen eines positiven Stroms von 200 Ampere, das Ganze bei einem Abstand von 3 mm zwischen der Stirnfläche und der Schweißfläche.

Die Wirkung derart exzentrischer Reinigungswirkung auf die Qualität der anschließenden Schweißvorgänge ist ohne weiteres nachvollziehbar.

Mit dem erfindungsgemäßen Verfahren und dem erfindungsgemäßen Bolzen 40 hingegen lassen sich diese Nachteile komplett vermeiden.

Dabei ist es nicht notwendig, an dem Schweißkopf 12 Mittel zur magnetischen Lichtbogenablenkung vorzusehen, um mit deren Hilfe den Lichtbogen um die Bolzenachse herum zu symmetrisieren. Demzufolge kann das vordere Ende des Schweißkopfes 12 schlank mit geringen Störkonturen ausgebildet werden.

## Patentansprüche

1. Verfahren (60) zum Kurzzeit-Lichtbogenschweißen mit Hubzündung, wobei ein Bolzen (40) an ein Werkstück (20), insbesondere an ein Blech (20), geschweißt wird, mit den Schritten:
a) Bereitstellen (64) eines Bolzens (40), der eine Stirnfläche (46) aufweist, mit der er auf eine Schweißfläche des Werkstücks (20) aufgeschweißt wird, wobei in der Mitte der Stirnfläche (46) ein prägnanter Vorsprung (48) ausgebildet ist,
b) Aufsetzen (66) des Vorsprungs (48) auf die Schweißfläche und Einschalten eines elektrischen Pilotstromes (Iₚ),
c) Abheben (68) des Bolzens (40) von der Schweißfläche während des eingeschalteten Pilotstromes (Iₚ), wobei ein Lichtbogen gezogen wird,
d) Einstellen (72) eines durch den Lichtbogen fließenden Schweißstromes (I_{w}), derart, dass die Stirnfläche (46) und die Schweißfläche anschmelzen,
e) Absenken (72) des Bolzens (40) auf die Schweißfläche, wobei sich die Schmelzen an Stirnfläche (46) und Schweißfläche vermischen, und
f) Abschalten (72) des Schweißstromes (I_{w}), so dass die Gesamtschmelze erstarrt, um so den Bolzen (40) stoffschlüssig mit dem Werkstück (20) zu verbinden,
**dadurch gekennzeichnet, dass**
nach dem Abheben (68) des Schweißbolzens (40) und vor dem Einstellen (72) des Schweißstromes zunächst in einem Reinigungsschritt (76) ein Reinigungsstrom (I_{c}) eingestellt wird, der dazu ausgelegt ist, die Schweißfläche und/oder die Stirnfläche (46) von Verunreinigungen, wie Schmiermittel oder Wachs, und/oder Beschichtungen, wie z.B. Korrosionsschutzschichten aus Zink, zu reinigen, wobei der Reinigungsschritt (76) dann durchgeführt wird, wenn (70) die Lichtbogenspannung (V) bei dem Pilotstrom (Iₚ) einen ersten vorbestimmten Schwellenwert (T₁) überschreitet.

2. Verfahren nach Anspruch 1, wobei der Reinigungsschritt (76) beendet wird, wenn (78) die Lichtbogenspannung (V) bei dem eingestellten Reinigungsstrom (I_{c}) einen zweiten vorbestimmten Schwellenwert (T₂) unterschreitet.

3. Verfahren nach einem der Ansprüche 1 - 2, wobei der Reinigungsstrom (I_{c}) als Wechselstrom eingestellt wird.

4. Verfahren nach Anspruch 3, wobei während des Reinigungsschrittes (76) die Polarität des Reinigungsstromes (I_{c}) im Bereich zwischen zweimal und zehnmal gewechselt wird.

5. Verfahren nach Anspruch 3 oder 4, wobei während des Reinigungsschrittes (76) das Tastverhältnis (T) in Abhängigkeit davon eingestellt wird, in welchem Umfang die Stirnfläche (46) bzw. die Schweißfläche zu reinigen sind.

6. Verfahren nach einem der Ansprüche 3 - 5, wobei während des Reinigungsschrittes die Symmetrie (Sy) des Wechselstromes in Bezug auf die Nulllinie (N) in Abhängigkeit davon eingestellt wird, in welchem Umfang die Stirnfläche (46) bzw. die Schweißfläche zu reinigen sind.

7. Verfahren nach einem der Ansprüche 1- 6, wobei das Werkstück (20) und der Bolzen (40) aus einer Aluminiumlegierung hergestellt sind.

8. Verfahren nach einem der Ansprüche 1-7, wobei in der Mitte der Stirnfläche (46) ein prägnanter Vorsprung (48) ausgebildet ist und wobei der Vorsprung (48) einstückig mit dem Bolzen (40) ausgebildet ist, und wobei der Vorsprung (48) gegenüber der Stirnfläche um 0,1 bis 1 mm vorsteht.

9. Verfahren nach Anspruch 8, wobei der Vorsprung (48) einen Durchmesser (D) im Bereich von 0,1 bis 2 mm aufweist.

10. Verfahren nach einem der Ansprüche 8 - 9, wobei der Vorsprung (48) sich zu seinem freien Ende hin verjüngt.

11. Verfahren nach Anspruch 10, wobei der Vorsprung (48) im Bereich der Stirnfläche (46) einen Durchmesser (D1) im Bereich von 0,1 bis 2 mm aufweist.

12. Verfahren nach Anspruch 10 oder 11, wobei der Vorsprung (48) im Bereich seines freien Endes einen Durchmesser (D2) im Bereich von 0,1 bis 2 mm aufweist.

## Claims

1. A method (60) for short-cycle arc welding with drawn-arc ignition, wherein a stud (40) is welded to a workpiece (20), more, particular to a piece of sheet metal (20), with the following steps:
a) provision (64) of a stud (40) having an end face (46) with which the stud is welded to a welding surface of the workpiece (20), wherein a distinct projection (48) is formed in the center of the end face,
b) placement (66) of the projection (48) on the welding surface and switch-on of an electric pilot current (I_{P}),
c) lifting (68) of the stud (40) from the welding surface while the pilot current (I_{P}) is switched on, whereby an arc is drawn,
d) establishment (72) of a welding current (I_{W}) flowing through the arc in such a manner that the end face (46) and the welding face start to melt,
e) lowering (72) of the stud (40) onto the welding surface, wherein the melts at the end face (46) and the welding surface mix, and
f) switch-off (72) of the welding current (I_{W}) so that the entire melt solidifies to join the stud (40) to the workpiece (20) in an integral manner,
**characterized in that**
after the lifting (68) of the welding stud (40) and before establishment (72) of the welding current, a cleaning current (I_{C}) is initially established in a cleaning step (76) that is designed to clean the welding surface and/or the end face (46) of contaminants such as lubricant or wax, and/or of coatings such as for example corrosion protection layers made from zinc, wherein the cleaning step (76) is performed only when (70) the arc voltage (V) exceeds a first predetermined threshold (T₁) during the pilot current (I_{P}).

2. The method of claim 1, wherein the cleaning step (76) is terminated when (78) the arc voltage (V) falls below a second predetermined threshold (T₂) during the established cleaning current (I_{C}).

3. The method of one of claims 1 to 2, wherein the cleaning current (I_{C}) is established as an alternating current.

4. The method of claim 3, wherein the polarity of the cleaning current (I_{C}) is switched in the range between two times and ten times during the cleaning step (76).

5. The method of claim 3 or 4, wherein the duty cycle (T) during the cleaning step (76) is adjusted as a function of the degree to which the end face (46) or the welding surface are to be cleaned.

6. The method of one of claims 3 to 5, wherein the symmetry (Sy) of the alternating current is set with respect to the zero line (N) during the cleaning step as a function of the degree to which the end face (46) or the welding surface are to be cleaned.

7. The method of any of claims 1 to 6, wherein the workpiece (20) and the stud (40) are made of an aluminum alloy.

8. The method of any of claims 1 to 7, wherein a distinct projection (48) is formed in the center of the end face (46), and wherein the projection (48) is formed integrally with the stud (40) and wherein the projection (48) projects beyond the end face by 0.1 to 1 mm.

9. The method of claim 8, wherein the projection (48) has a diameter (D) in the range from 0.1 to 2 mm.

10. The method of any of claims 1 to 9, wherein the projection (48) tapers toward its free end.

11. The method of claim 10, wherein the projection (48) has a diameter (D1) in the region of the end face (46) in the range from 0.1 to 2 mm.

12. The method of claim 10 or 11, wherein the projection (48) has a diameter (D2) in the region of its free end in the range from 0.1 to 2 mm.

## Revendications

1. Procédé (60) de soudage de courte durée à l'arc lumineux avec allumage poussé, dans lequel un goujon (40) est soudé sur une pièce (20), en particulier sur une tôle (20), le procédé comportant les étapes qui consistent à :
a) préparer (64) un goujon (40) qui présente une surface frontale (46) par laquelle il est soudé sur une surface de soudage de la pièce (20), une saillie bombée (48) étant formée au milieu de la surface frontale (46),
b) placer (66) la saillie (48) sur la surface de soudage et brancher un courant électrique pilote (Iₚ),
c) relever (68) le goujon (40) de la surface de souage pendant que le courant pilote (Iₚ) est branché, ce qui forme un arc lumineux,
d) ajuster (72) le courant de soudage (I_{w}) qui s'écoule dans l'arc lumineux de telle sorte que la surface frontale (46) et la surface de soudage fondent,
e) abaisser (72) le goujon (40) sur la surface de soudage, les bains de fusion se mélangeant sur la surface frontale (46) et la surface de soudage et
f) débrancher (72) le courant de soudage (I_{w}) de telle sorte que l'ensemble de la matière fondue se solidifie pour ainsi relier le goujon (40) en correspondance de matière avec la pièce (20),
**caractérisé en ce que**
dans une étape de nettoyage (76) qui a lieu après le relèvement (68) du goujon (40) à souder et avant l'établissement (72) du courant de soudage, un courant de nettoyage (I_{c}) conçu pour débarrasser la surface frontale (46) d'impuretés telles que du lubrifiant ou de la cire et/ou de revêtements, par exemple des couches de zinc pour la protection contre la corrosion, est établi et
**en ce que** l'étape de nettoyage (76) est exécutée lorsque (70) la tension (V) de l'arc lumineux au courant pilote (Iₚ) dépasse une première valeur de seuil (T₁) prédéterminée.

2. Procédé selon la revendication 1, dans lequel l'étape de nettoyage (76) se termine lorsque (78) la tension (V) de l'arc lumineux au courant de nettoyage (I_{c}) n'atteint plus une deuxième valeur de seuil (T₂) prédéterminée.

3. Procédé selon l'une des revendications 1 et 2, dans lequel le courant de nettoyage (I_{c}) est un courant alternatif.

4. Procédé selon la revendication 3, dans lequel la polarité du courant de nettoyage (I_{c}) est alternée entre deux fois et dix fois pendant l'étape de nettoyage (76).

5. Procédé selon les revendications 3 ou 4, dans lequel pendant l'étape de nettoyage (76), le rapport d'échantillonnage (T) est réglé selon la mesure dans laquelle la surface frontale (46) ou la surface de soudage doivent être nettoyées.

6. Procédé selon l'une des revendications 3 à 5, dans lequel, pendant l'étape de nettoyage, la symétrie (Sy) du courant alternatif par rapport à la ligne nulle (N) est réglée selon la mesure dans laquelle la surface frontale (46) ou la surface de soudage doivent être nettoyées.

7. Procédé selon l'une des revendications 1 à 6, dans lequel la pièce (20) et le goujon (40) sont réalisés en un alliage d'aluminium.

8. Procédé selon l'une des revendications 1 à 7, dans lequel une saillie bombée (48) est formée au milieu de la surface frontale (46) et la saillie (48) est formée d'un seul tenant avec le goujon (40), la saillie (48) débordant de la surface frontale de 0,1 à 1 mm.

9. Procédé selon la revendication 8, dans lequel la saillie (48) présente un diamètre (D) compris dans la plage de 0,1 à 2 mm.

10. Procédé selon l'une des revendications 8 et 9, dans lequel la saillie (48) se rétrécit en direction de son extrémité libre.

11. Procédé selon la revendication 10, dans lequel la saillie (48) présente au niveau de la surface frontale (46) un diamètre (D1) compris dans la plage de 0,1 à 2 mm.

12. Procédé selon les revendications 10 ou 11, dans lequel la saillie (48) présente au niveau de son extrémité libre un diamètre (D2) compris dans la plage de 0,1 à 2 mm.
